# EUROPEAN PATENT SPECIFICATION

(11) **EP 2 147 810 B1**
(45) Date of publication and mention of the grant of the patent: **28.09.2011**
(21) Application number: 09165028.3
(22) Date of filing: 09.07.2009
(51) Int. Cl.: B60H 1/00, F16H 49/00

(54) **Regulating flap actuator and regulating flap assembly for a heating and ventilating unit**
Stellklappenaktuator sowie Stellklappenbaugruppe einer Heizungs-Lüftungseinheit
Actionneur pour un volet de réglage et agencement de volet de réglage pour une unité de chauffage et ventilation

(30) Priority: 15.07.2008 DE 102008033200
(43) Date of publication of application: 27.01.2010
(73) Proprietor: Valeo Klimasysteme GmbH, 96476 Rodach (DE)
(72) Inventor: Schramm, Michael, 96465 Neustadt/Coburg (DE); Fuhrmann, Lutz, 96479 Weitramsdorf (DE); Vogerl, Christian, 96450 Coburg (DE); Sondermann, Mark, 96479 Weitramsdorf (DE); Heinz, Marcus, 98704 Langewiesen (DE)
(74) Representative: Léveillé, Christophe

(56) References cited:
- EP-A- 1 628 045
- WO-A-02/070935
- DE-A1-102004 043 077
- US-A1- 2005 046 377
- MUSSER C W: "BREAKTHROUGH IN MECHANICAL DRIVE DESIGN: THE HARMONIC DRIVE" MACHINE DESIGN, PENTON MEDIA, CLEVELAND, OH, US, 14 April 1960 (1960-04-14), pages 160-173, XP002029495 ISSN: 0024-9114

## Description

The invention relates to a regulating flap actuator, in particular of a regulating flap of a heating and ventilating unit of a vehicle, and to a regulating flap assembly.

In heating and ventilating units of vehicles, which also include heating, ventilation and air conditioning units (so-called HVAC units), provision is usually made of electromotively driven regulating flaps which control fluid flows. The associated regulating flap actuators have electric motors of the smallest possible construction which are situated outside the flow-guiding flap housing. The electric motors are connected in a torque-transmitting fashion via a gearing to the shaft connection of the regulating flap, with said gearing being a lever mechanism. A lever mechanism of said type makes it possible to position the drive motor at a considerable distance from the flap shaft.

Another arrangement of a regulating flap actuator is known for example from document WO 02/070935, which is considered as the closest prior art.

It is an object of the invention to create a regulating flap actuator which is of very compact construction, and also a regulating flap assembly which is of compact construction. Said object is achieved by the regulating flap actuator claimed in independent claim 1.

The regulating flap actuator according to the invention has an electric drive motor, a torque-transmitting shaft connection for fastening to the regulating flap shaft, and a stressed shaft gearing which is located between the drive motor and the shaft connection and which is also referred to as a Harmonic Drive Gearing®. The Harmonic Drive Gearing, which is of very compact construction, transmits the torque generated by the drive motor to the shaft connection, with the gearing having two ring gears, which are situated one inside the other, in the form of an outer circular spline and an inner flex spline.

Stressed shaft gearings are very robust, are quiet in operation, have a high level of efficiency and provide high transmission ratios. On account of the gearing with a high transmission ratio, it is also possible for an electric motor which is of small construction and which imparts a low torque to be easily accommodated in a space-saving fashion.

At least one section of the drive motor is accommodated in the gearing itself, as in the preferred embodiment. If appropriate, the gearing itself, in addition to the toothed section of the circular spline and of the flex spline, also has integrally formed sections, in particular sections which are integrally formed in a unipartite fashion, which can form the holding spaces for the motor or an electronic control unit for said motor. Said connecting spaces may constitute elongations of the pot-shaped circular spline or flex spline or may be situated on the rear side thereof or extend away therefrom.

The drive motor and/or the electronic control unit for said drive motor are/is preferably situated at least partially in, and are/is surrounded by, one of the ring gears.

Furthermore, it is provided that one of the ring gears, preferably the flex spline, has a fastening means for the attachment thereof to the flap housing. It is also possible in this way to save on additional installation space and to reduce the number of parts.

Said fastening means is for example part of a bayonet connection, in particular the "male" part of the bayonet connection.

The fastening means may simultaneously also be the fastening means for attaching the entire actuator to the flap housing. Installation space and the number of parts can also be reduced in this way.

It is also advantageous with regard to the number of parts and stability if the one or more fastening means is integrally formed on the corresponding ring gear in a unipartite fashion.

Furthermore, the ring gear may be rotationally fixedly attached to the flap housing, in particular by means of a latching connection which is integrally formed on said ring gear.

Said latching connection can for example be closed by means of a rotation of the associated ring gear and a lateral deflection of a latching finger which is in particular integrally formed on the flex spline.

As already mentioned, the flex spline is preferably that ring gear which is provided with the fastening means.

One preferred embodiment of the invention provides that a receiving housing for an already mentioned electronic control unit of the drive motor is integrality formed on a ring gear. It is therefore not necessary to provide a separate receiving housing, but rather said receiving housing can be coupled to the ring gear in a unipartite fashion and can be of any desired shapes which are precisely matched to the given installation space conditions.

According to the invention, the shaft connection is connected to the circular spline in a torque-transmitting fashion or is formed on the circular spline.

In this connection, it is possible for webs to be provided from the circular spline to the shaft for the torque coupling of said circular spline and shaft. Said webs run in particular laterally along the flex spline.

By means of said webs, it is also possible to realize a further function, specifically a torque limitation in the circumferential direction, if the webs simultaneously form stops for the rotational movement of the flap in the circumferential direction. Here, the webs extend through recesses of the flap housing and preferably abut against said flap housing.

It is of course also alternatively possible for the flex spline to be connected to the shaft in a torque-transmitting fashion.

If the flex spline is connected to the shaft in a torque-transmitting fashion, it is also possible, if appropriate, for a housing for holding the drive motor and/or an electronic control unit for the drive motor to be provided or formed on the circular spline on the end opposite the shaft connection.

The motor may be a DC motor. In this connection, it is advantageous if the drive-output-side ring gear adjusts a potentiometer which is coupled to the controller.

The invention also relates to a regulating flap assembly having a regulating flap actuator which is preferably the regulating flap actuator according to the invention. The regulating flap assembly according to the invention is in particular part of a heating and ventilating unit of a vehicle, and comprises a regulating flap actuator which drives a regulating flap via a shaft connection. The assembly also comprises a flap housing which is traversed by flow and in the interior of which the regulating flap is arranged.

The drive motor is preferably accommodated at least in sections in the regulating flap shaft. This saves a considerable amount of installation space; in particular, less installation space is required outside the flap housing than in previous systems. The motor may also be arranged entirely within the housing, and here, may also be situated completely within the regulating flap shaft.

Further features and advantages of the invention can be gathered from the following description and from the following drawings, to which reference is made. In the drawings:
- Figure 1 shows a cross-sectional view through an embodiment of the regulating flap assembly according to the invention having a regulating flap actuator according to the invention,
- Figure 2 shows a plan view of the regulating flap actuator according to Figure 1 with a cut-away flap housing,
- Figure 3 shows a further side view of the regulating flap actuator according to the invention shown in Figure 1,
- Figure 4 shows a further side view of the regulating flap actuator shown in Figure 1,
- Figure 5 shows a view of the regulating flap assembly according to the invention as viewed in the direction of the arrow V in Figure 2,
- Figure 6 shows a view, corresponding to the view in Figure 5, of the flap housing with the regulating flap actuator removed,
- Figure 7 shows a view of the regulating flap actuator according to Figure 5 with a cover for the control electronics removed,
- Figure 8 shows a sectioned view through the regulating flap actuator according to the invention with a circular spline removed,
- Figure 9 shows a side view through the regulating flap actuator according to the invention with a wave generator removed,
- Figures 10a to 10d show schematic views of a stressed shaft gearing which can be used, in different positions of the wave generator,
- Figure 11 shows a schematic view of a slightly modified embodiment of the regulating flap actuator,
- Figure 12 shows a schematic view of a further embodiment of the regulating flap actuator according to the invention,
- Figure 13 shows a perspective sectioned view through a regulating flap actuator of a further embodiment,
- Figure 14 shows a perspective sectioned view through the regulating flap actuator according to Figure 13 with a part of the flap housing,
- Figure 15 shows a schematic sectioned view of a further embodiment of the regulating flap actuator according to the invention with a regulating flap fitted, and
- Figure 16 shows a front view of the regulating flap actuator according to Figure 15.

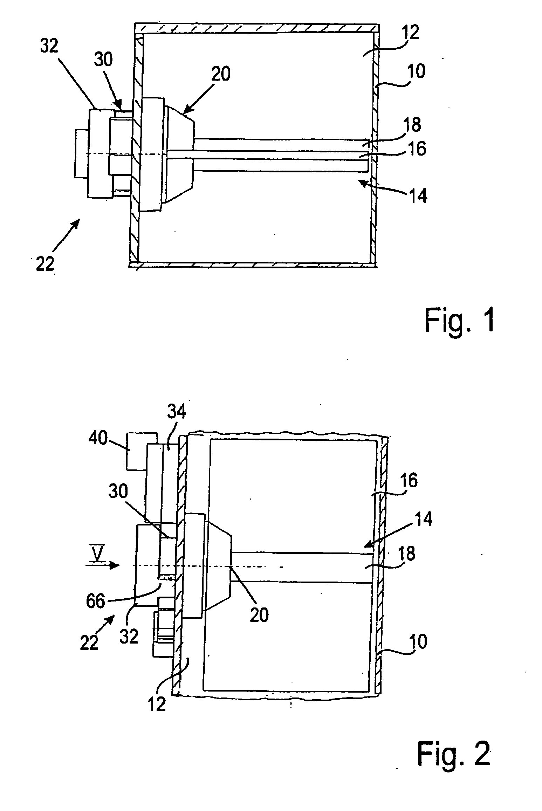

Figure 1 illustrates a regulating flap assembly for a heating and ventilating unit of a vehicle, in particular for the heating, ventilation and air conditioning unit.

10 denotes a flap housing which is traversed by a fluid and which is only illustrated as being so small symbolically, and may in fact be significantly larger and formed with a plurality of throughflow ducts. A flow duct 12 for the fluid is delimited in the flap housing 10. Said flow duct 12 can be opened or closed by means of a so-called regulating flap 14. Figure 1 illustrates the open position. The regulating flap 14 comprises an in particular plate-shaped blade 16 (see Figure 2) which at least substantially closes off the flow duct 12 when rotated by 90° in relation to Figure 1. Furthermore, the regulating flap 14 has a regulating flap shaft 18 to which the blade 16 is fastened.

The regulating flap 14 is preferably driven only at one side, specifically at its drive side.

At the drive side, the regulating flap shaft 18 widens in the outward direction and forms an outwardly open, pot-shaped end.

A regulating flap actuator 22 is connected to the shaft 18 in a torque-transmitting fashion by means of a shaft connection, which is to be explained below. The actuator 22 extends partially into the interior of the regulating flap shaft 18, specifically in the region of the pot-shaped end 20, and the actuator 22 extends partially outside the flap housing 10.

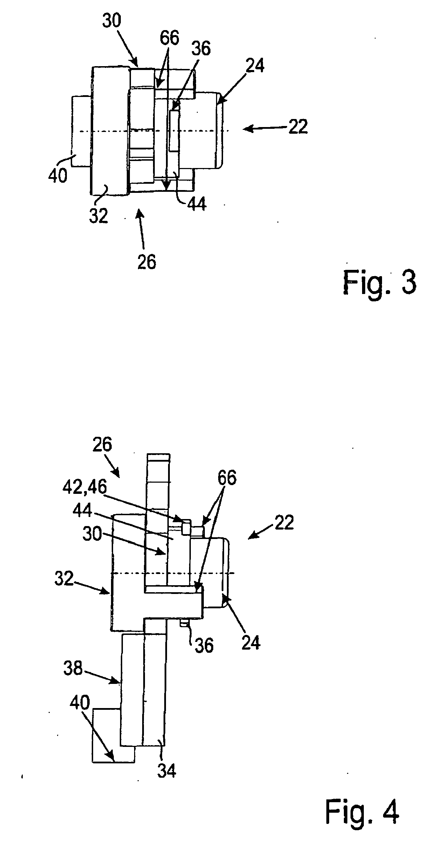

Figure 3 shows some parts of the actuator 22, specifically an electric drive motor 24 which is of very small construction and which extends at least partially, preferably even entirely, within the flap housing 10 and is thereby held predominantly in the hollow interior of the end 20 of the shaft 18.

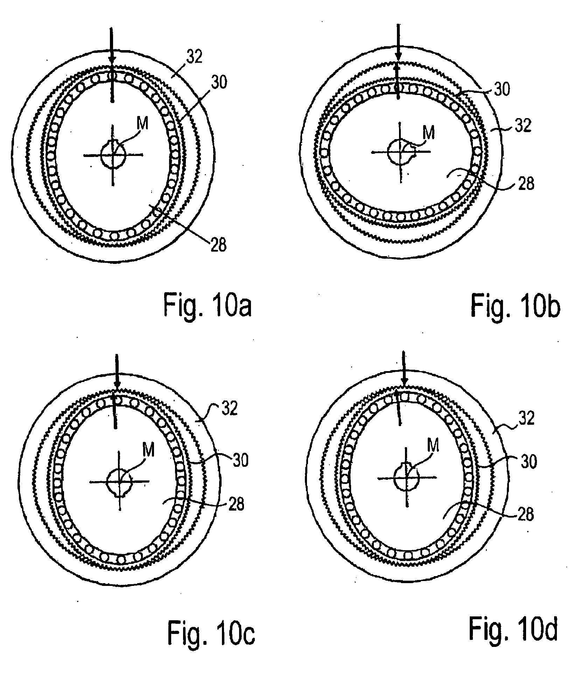

The motor 24 also extends partially into a gearing 26, which is connected thereto, in the form of a stressed shaft gearing, also referred to as a Harmonic Drive Gearing®, which is explained in more detail in conjunction with Figures 10a to 10d.

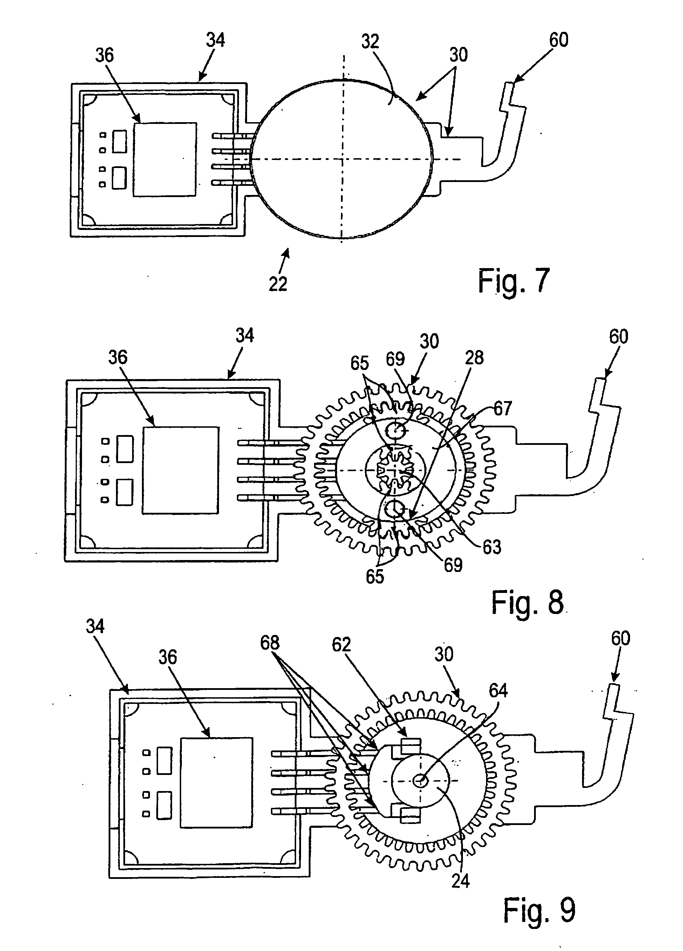

The stressed shaft gearing comprises a so-called wave generator 28 situated at the inside, which wave generator 28 is coupled to the input shaft, that is to say to the motor. The wave generator 28 is designed for example as an elliptical disk (Figure 10), as a planetary gear set (Figure 8) or as a bracket with two rollers or gearwheels attached to the rotating carrier diametrically with respect to the central axis M.

The wave generator 28 is seated in a flex spline 30 which is designed as a ring gear and which has a toothing on the outside. The flex spline 30 is flexible and is elastically deformed into an oval shape by the wave generator 28 when the latter rotates about the central axis M. Here, the flex spline 30 meshes at its diametrically opposite, radially outermost sections with a further ring gear, specifically the circular spline 32, which conventionally has two teeth more than the flex spline 30.

The drive output by a stressed shaft gearing of said type is provided via the circular spline 32 or the flex spline 30 depending on the application. The non-driven ring gear (circular spline 32) is then connected fixedly in terms of torque conventionally to the housing.

If the wave generator 28 is rotated clockwise, as shown in the sequences according to Figures 10a to 10d, then the flex spline 30, which is deformed into the shape of an ellipse, moves counter to the rotational direction of the wave generator 28. After one rotation of the wave generator 28, the flex spline 30 has rotated backward only by two teeth with respect to the circular spline 32, as can be seen from the increasing offset of the teeth denoted by arrows in Figures 10a-d. Very high transmission ratios of 50:1 to 320:1 are generated using a stressed shaft gearing of said type.

In the embodiment according to Figures 1 to 9, the circular spline 32 constitutes a pot-shaped outer housing which surrounds the flex spline 30 (see Figures 3 and 4).

In the embodiment according to Figures 1 to 9, the circular spline 32 is the drive output element, that is to say it is rotated, whereas the flex spline 30 remains positionally fixed.

The positionally fixed flex spline 30 is injection moulded from a plastic material.

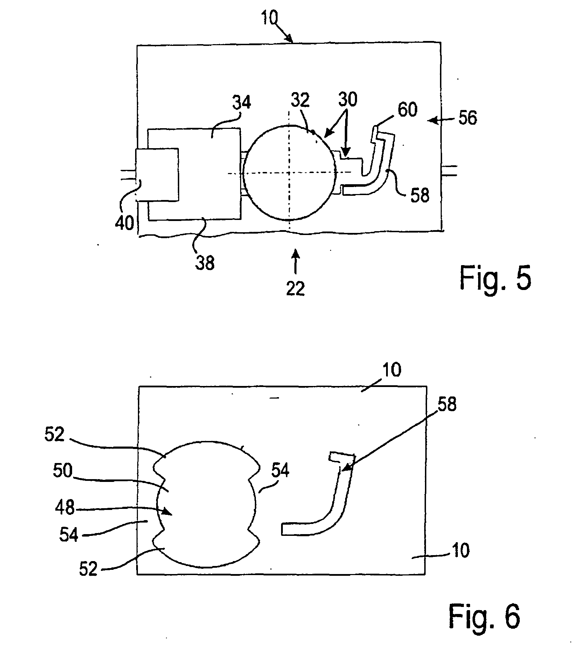

A further property of the flex spline 30 which is used is that a part of a housing 34 for holding an electronic control unit 36 of the drive motor 24 is attached to said flex spline 30, preferably integrally formed on or cast with said flex spline 30 in a unipartite fashion (Figures 5 to 9). The electronic control unit 36 can be clearly seen in Figures 7 to 9. Only a cover 38 is placed onto said box-shaped housing 34 in a dust-tight fashion. In Figure 4, 40 denotes the plug connection for the electronic control unit 36, which plug connection provides the connection to the LIN bus and to the power network of the vehicle.

To fasten the pot-shaped flex spline 30 to the housing 10, a fastening means 42 is provided, see Figure 4.

In the embodiment shown, the fastening means 42 is integrally formed on the flex spline 30 in a unipartite fashion.

The fastening means 42 is, merely by way of example, part of a bayonet connection. For this purpose, the flex spline 30 is designed to be axially longer than the pot-shaped section of the circular spline 32, and has an annular projection 44 with a relatively small outer diameter, from the end of which project two diametrically radially outwardly projecting fingers 46 as part of the bayonet connection.

A wall of the flap housing 10, which wall is illustrated in Figure 6, has an opening 48 which is formed for a bayonet connection and which has a cylindrical central section 50, the diameter of which is matched to the diameter of the annular projection 44, and two circular ring segments 52 which are situated at a radial distance therefrom and which allow the flex spline 30 together with the fingers 46 to be inserted axially into the opening. After insertion, the flex spline 30 is rotated, such that the finger 46 comes to rest in the region of the walls 54 between the opposite circular ring segments 52. The flex spline 30 is thereby axially fixedly attached to the housing.

The entire regulating flap actuator 22 is also fastened to the housing 10 at least in the axial direction by means of the flex spline and said fastening means 42.

In the circumferential direction, it is also possible to provide a further securing means, which may however also be omitted depending on the design of the fastening means on the flex spline 30.

In the embodiment shown, a latching connection 56 which acts in the circumferential direction is provided as a circumferential securing means, that is to say as a securing means for preventing rotation of the flex spline 30 and therefore of the entire actuator, see Figure 5. Said latching connection 56 comprises a web 58 which is integrally formed on the flap housing 10 and also a latching finger 60 which is matched in terms of shape to the web 58 and which is for example formed as an integral projection of the flex spline 30. When the flex spline 30 is rotated clockwise, the finger 60 slides into the web 56 and latches after having been bent laterally inwards (see Figure 5). The latching finger 60 can be released, by being pressed in the lateral direction, in order to remove the actuator from the housing 10. In operation, however, the web 58 and latching finger 60 prevent the flex spline 30 together with the rest of the actuator from rotating and being released from the housing 10.

For further explanation, reference is made to Figures 7 to 9, in which Figure 8 shows the inner workings of the stressed shaft gearing with the circular spline 32 removed, in particular the interaction of the wave generator 28 and of the flex spline 30. In Figure 9, in contrast, the wave generator 28 has been removed, such that it is possible to see the motor 24 together with its rotor 64.

To introduce the torque, it is necessary for the motor 24 to be held rotationally fixed. This is achieved for example in that the motor 24 is rotationally fixedly attached to the flex spline 30. Said fastening of the motor 24 to the flex spline 30 takes place for example by means of a clip 62 whose fingers are illustrated in Figure 9.

The rotor 64 of the motor 24 (see Figure 9) is coupled fixedly in terms of torque to the wave generator 28, which in the present case has a sun gear 63 with two planets 65 (see Figure 8) which are rotatably attached to a planet carrier 67. 69 denotes the rotational axes of the two planets 65. Said embodiment of a wave generator 28 is however only one of the possible embodiments. In the embodiment shown according to Figure 8, the planets 65 deform the flex spline 30 into the shape of an oval by meshing with the latter at the inside.

As stated above, in the illustration shown in Figure 8, the circular spline 32, which conceals the flex spline 30 and the wave generator 28 from the outside in the manner of a cover, has been removed.

As already explained, the circular spline 32 constitutes the drive output in the embodiment in Figures 1 to 9. For this purpose, the circular spline 32, which can rotate by approximately 90°, must be coupled to the shaft 18 fixedly in terms of torque in order to place the flap 14 into the open and closed positions.

For torque transmission, two webs 66 are provided, which webs 66 are preferably integrally formed on the circular spline 32 in a unipartite fashion (see Figure 4). Said webs 66 run axially along the flex spline 30, which projects inwards with respect to the pot-shaped section of the circular spline 32, and through the circular-ring-segment-shaped sections 52 of the opening 48 in the housing 10 (see Figure 6) into the interior of said housing 10. The ends of the webs 66 are inserted into shaft connections.

In the present embodiment, the shaft connections are receiving openings, which are matched to the shape of the webs 66, on the inner side of the end 20 of the shaft 18. The shaft connection is therefore integrally formed on the shaft 18 in a unipartite fashion.

With reference to Figure 6, it is clear that the webs 66 can be rotated only in the region of the circular-ring-segment-shaped sections 52. A rotation is possible only by approximately 90°, with the circumferential ends of the sections 54 also constituting stops for the webs 66, such that these perform a dual function.

The cabling to the motor 24 runs through the flex spline 30. The contact ends 68 (see Figure 9) of the electronic control unit 36 lie in the interior space of the flex spline 30, and are therefore partially held by said flex spline 30 and are inserted in the clip 62 of the motor 24. Said partial accommodation of the electronic unit 36 in the interior of the gearing and/or in a housing 34 which is integrally formed with said gearing in a unipartite fashion reduces installation space and parts.

The function of the regulating flap assembly with the regulating flap actuator 22 is explained below. The drive motor 24 is supplied with power by means of the electronic control unit 36, and the rotor 64 starts to rotate the wave generator 28. The flex spline 30 is deformed into the shape of an oval which migrates in the circumferential direction. The outer toothing of the flex spline 30 rolls in the inner toothing of the circular spline 32. However, since the flex spline 30 is connected to the housing 10 so as to be fixed in the rotational direction, the circular spline 32 rotates. Said rotation is transmitted via the webs 66 into the shaft 18, such that the regulating flap 14 can be pivoted between an open position and a closed position. In the respective end positions, the webs 66 abut against the wall 54 (see Figure 6).

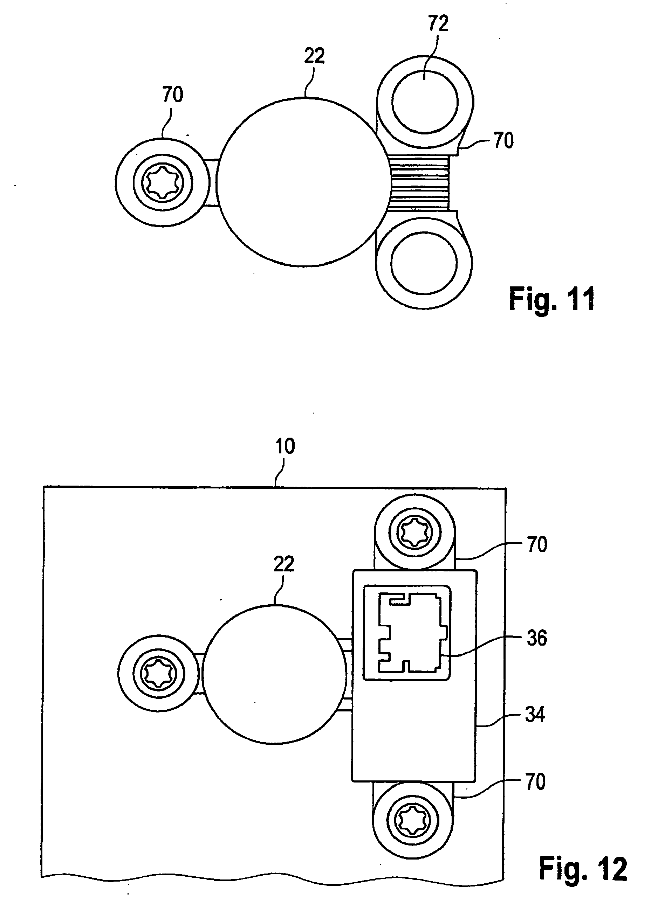

In the embodiment according to Figure 11, the fastening means for locking the actuator 22 to the housing 10 is of slightly different design, specifically in the form of integrally formed arms 70 with openings 72, by means of which the actuator 22 is screwed to the housing 10.

Depending on which of the two ring gears 30, 32 is formed so as to be fixed with respect to the housing 70, the arms 70 are also integrally formed either on the circular spline 32 or on the flex spline 30.

It should of course also be emphasized that the housing 34 for accommodating the electronic control unit 36 need not necessarily be attached to or integrally formed on the actuator 22. The embodiment according to Figures 1 to 9 is thus of course equally conceivable without a housing 34 of said type.

The embodiment according to Figure 11 likewise has no integrally formed housing 34 for accommodating the electronic control unit 36. Said housing 34 is however provided in the embodiment according to Figure 12, which differs from that according to Figure 11 only by the housing 34, which is integrally formed on the arms 70, for accommodating the electronic control unit 36.

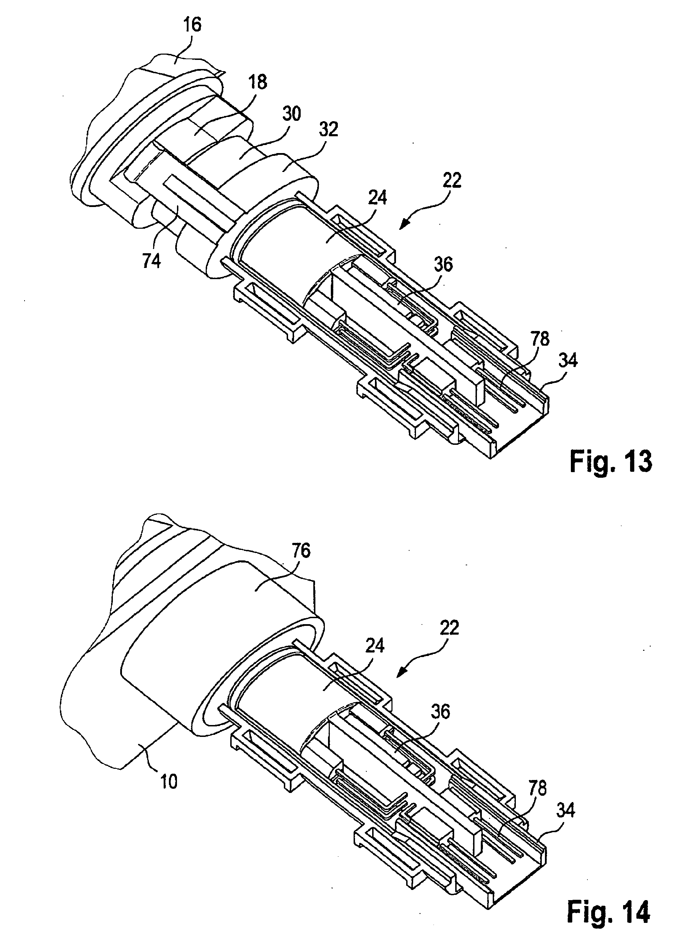

In the embodiment according to Figures 13 and 14, the drive motor 24 is situated outside the housing 10 and also outside the regulating flap shaft 18, which is indicated in Figure 13. In the embodiment illustrated here, the flex spline 30 forms the drive output. The flex spline 30 is connected fixedly in terms of torque to the shaft 18, with the shaft connection not being explicitly shown here. The two parts may also merge into one another in a unipartite fashion. The flex spline 30 extends in the circular spline 32 which is arranged so as to be fixed with respect to the housing. In this case, the circular spline 32 is likewise of pot-shaped design and has integrally formed on it two fastening arms 74 which act as a latching connection to the housing 10. Said fastening means in the form of the fastening arms 74 again serves to provide the entire locking of the actuator 22 to the housing 10.

In said embodiment, the housing 10 has integrally formed on it a cylindrical receiving ring 76 in which the gearing is located. On the side facing away from the shaft 18, the circular spline 32 has integrally formed on it, in particular integrally formed on it in a unipartite fashion, a housing 34 for accommodating both the motor 24 and also the electronic control unit 36. It is therefore the case in this embodiment, too, that the motor 24 and electronic control unit 36 are accommodated in the gearing, that is to say in the present case in integral extensions of the gearing.

Plug connections 78 are formed on the end of the electronic control unit 36. The connection to a bus system and to the power supply takes place via said plug connections 78.

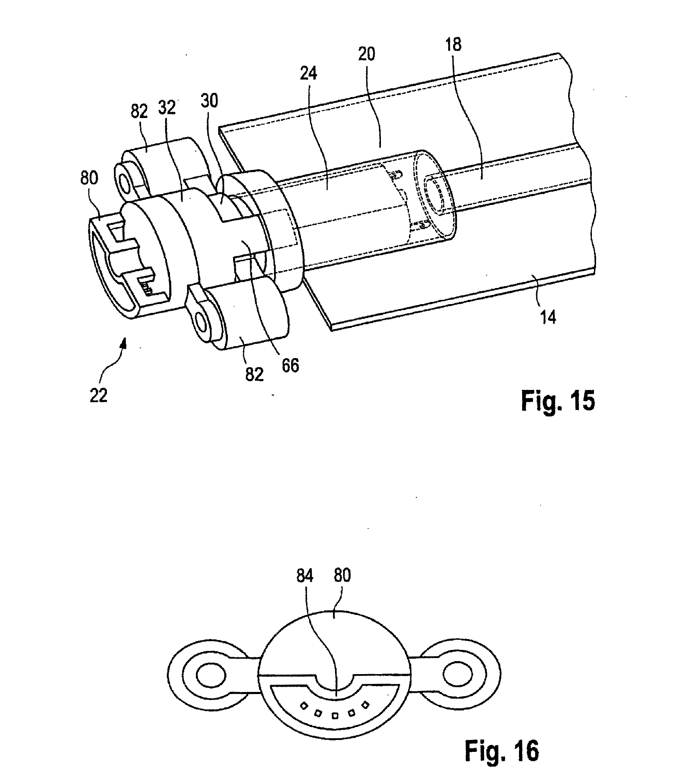

The construction according to Figures 15 and 16 does not require any electronic control units 36, since the drive motor 24 is a DC motor. In the embodiment shown, in which the flap housing 10 has been omitted for clarity, the motor 24 is seated entirely in the widened end 30 of the shaft 18. A cover 80 is screwed to the housing 10 by means of the fastening screws of the actuator 20. For this purpose, the flex spline 30 has integrally formed, radially outwardly projecting fastening means 82 in the form of arms. Here, the circular spline 32 is again formed as a drive-output-side ring gear and has the webs 66 already explained in connection with Figures 1 and 9 for torque transmission into the shaft 18.

The rotating circular spline 32 engages by means of a pin (not shown) into the loop of a Hall sensor or potentiometer 84 (see Figure 16) which is seated in the cover 80. On account of the increased spatial requirement of the DC motor 24, the hollow part of the shaft 18, that is to say the end 20 of the shaft 18, is designed to be of large volume. For this purpose, however, a large installation volume around the actuator 22 is lost. The flex spline 30 and circular spline 32 now perform only the functions of fastening and providing drive output.

It should be emphasized that the accommodation of the drive 26 in the shaft 18 would of course also lead to installation space advantages in connection with other gearings, in particular single-stage gearings with a high transmission ratio.

## Claims

1. Regulating flap actuator, in particular of a regulating flap (14) of a heating and ventilating unit of a vehicle, having
- an electric drive motor (24),
- a torque-transmitting shaft connection for fastening to a regulating flap shaft (18), and
- a stressed shaft gearing (26) which is located between the drive motor (24) and the shaft connection,
which stressed shaft gearing (26) transmits the torque generated by the drive motor (24) to a shaft connection, the stressed shaft gearing (26) having two ring gears, which are situated one inside the other, in the form of an outer circular spline (32) and an inner flex spline (30), **characterized in that** the shaft connection is connected to the outer circular spline (32) in a torque-transmitting fashion or is formed on the outer circular spline (32).

2. Regulating flap actuator according to Claim 1, **characterized in that** at least one section of the drive motor (24) is accommodated in the gearing (26) itself.

3. Regulating flap actuator according to Claim 2, **characterized in that** the drive motor (24) and/or an electronic control unit (36) of the drive motor (24) extend(s) at least partially into, and are/is surrounded by, one of the ring gears.

4. Regulating flap actuator according to one of the preceding claims, **characterized in that** one of the ring gears has a fastening means (42) for the attachment thereof to the flap housing (10).

5. Regulating flap actuator according to Claim 4, **characterized in that** the fastening means (42) is a part of a bayonet connection.

6. Regulating flap actuator according to Claim 4 or 5, **characterized in that** the fastening means (42) simultaneously forms the fastening means for attaching the entire actuator (22) to the flap housing (10).

7. Regulating flap actuator according to one of Claims 4 to 6, **characterized in that** the fastening means (42) is integrally formed on the associated ring gear in a unipartite fashion.

8. Regulating flap actuator according to one of Claims 4 to 7, **characterized in that** a ring gear can be rotationally fixedly attached to the flap housing (10) by means of a latching connection which is in particular integrally formed on said ring gear.

9. Regulating flap actuator according to Claim 8, **characterized in that** the latching connection can be closed by means of a rotation of the associated ring gear and a lateral deflection of a latching finger (60) which is in particular integrally formed on the flex spline (30).

10. Regulating flap actuator according to one of Claims 4 to 9, **characterized in that** the ring gear which is provided with the fastening means (42) is the flex spline.

11. Regulating flap actuator according to one of the preceding claims, **characterized in that** a receiving housing (34) for an electronic control unit (36) of the drive motor (24) is integrally formed on a ring gear.

12. Regulating flap actuator according to one of the preceding claims, **characterized in that** webs (66) run from the circular spline (32) to the shaft (18), for the torque coupling thereof, laterally along the flex spline (30).

13. Regulating flap actuator according to Claim 12, **characterized in that** the webs (66) run through recesses (52) of the flap housing (10) and simultaneously form stops for the rotational movement of the flap (14) in the circumferential direction.

14. Regulating flap actuator according to one of Claims 1 to 11, **characterized in that** the flex spline (30) is connected to the shaft (18) in a torque-transmitting fashion and **in that** a housing (34) for holding the drive motor (24) and/or an electronic control unit (36) for the drive motor (24) is provided on the end opposite the shaft connection.

15. Regulating flap actuator according to one of the preceding claims, **characterized in that** the motor (24) is a DC motor.

16. Regulating flap actuator according to Claim 15, **characterized in that** the drive-output-side ring gear adjusts a potentiometer (84) or Hall sensor.

17. Regulating flap assembly, in particular of a heating and ventilating unit of a vehicle, having a regulating flap actuator (22), to one of the preceding claims, which has an electric drive motor (24), having a regulating flap (14) which is driven by the regulating flap actuator (22) via a shaft connection, and having a flap housing (10) which is traversed by flow and in the interior of which is arranged the regulating flap (14).

18. Regulating flap assembly according to Claim 17, **characterized in that** the drive motor (24) is accommodated at least in sections, preferably entirely, in the regulating flap shaft (18).

19. Regulating flap actuator according to one of the preceding claims, **characterized in that** the wave generator (28) comprises a sun gear (63) and planet gears (65) which mesh with said sun gear (63), with the planet gears (65) meshing with the flex spline (30) and deforming the latter.

## Patentansprüche

1. Regelklappen-Stellorgan, insbesondere für eine Regelklappe (14) einer Heizungs- und Lüftungseinheit eines Fahrzeugs, umfassend
- einen elektrischen Antriebsmotor (24),
- eine Drehmoment übertragende Wellenverbindung zur Befestigung an einer Regelklappenwelle (18), und
- ein Spannungswellengetriebe (26), das sich zwischen dem Antriebsmotor (24) und der Wellenverbindung befindet,
wobei das Spannungswellengetriebe (26) das von dem Antriebsmotor (24) erzeugte Drehmoment auf eine Wellenverbindung überträgt, wobei das Spannungswellengetriebe (26) zwei Zahnkränze aufweist, die sich in Form eines äußeren kreisförmigen Keilelements (32) und eines inneren flexiblen Keilelements (30) ineinander befinden, **dadurch gekennzeichnet, dass** die Wellenverbindung mit dem äußeren kreisförmigen Keilelement (32) Drehmoment übertragend verbunden ist oder auf dem äußeren kreisförmigen Keilelement (32) gebildet ist.

2. Regelklappen-Stellorgan nach Anspruch 1, **dadurch gekennzeichnet, dass** mindestens ein Bereich des Antriebsmotors (24) in dem Getriebe (26) selber untergebracht ist.

3. Regelklappen-Stellorgan nach Anspruch 2, **dadurch gekennzeichnet, dass** der Antriebsmotor (24) und/oder eine elektronische Steuereinheit (36) des Antriebsmotors (24) sich mindestens teilweise in einen der Zahnkränze erstreckt/erstrecken und davon umgeben ist/sind.

4. Regelklappen-Stellorgan nach einem der vorhergehenden Ansprüche, **dadurch gekennzeichnet, dass** einer der Zahnkränze ein Befestigungsmittel (42) für seine Anbringung an dem Klappengehäuse (10) aufweist.

5. Regelklappen-Stellorgan nach Anspruch 4, **dadurch gekennzeichnet, dass** das Befestigungsmittel (42) ein Teil eines Bajonettverbindung ist.

6. Regelklappen-Stellorgan nach Anspruch 4 oder 5, **dadurch gekennzeichnet, dass** das Befestigungsmittel (42) gleichzeitig das Befestigungsmittel zum Anbringen des ganzen Stellorgans (22) an dem Klappengehäuse (10) bildet.

7. Regelklappen-Stellorgan nach einem der Ansprüche 4 bis 6, **dadurch gekennzeichnet, dass** das Befestigungsmittel (42) auf dem dazugehörigen Zahnkranz auf einteilige Art und Weise einstückig gebildet ist.

8. Regelklappen-Stellorgan nach einem der Ansprüche 4 bis 7, **dadurch gekennzeichnet, dass** ein Zahnkranz drehfest an dem Klappengehäuse (10) anhand einer Verriegelungsverbindung angebracht werden kann, die insbesondere auf dem Zahnkranz einstückig gebildet ist.

9. Regelklappen-Stellorgan nach Anspruch 8, **dadurch gekennzeichnet, dass** die Verriegelungsverbindung anhand einer Drehung des dazugehörigen Zahnkranzes und einer seitlichen Ablenkung eines Verriegelungsfingers (60), der insbesondere auf dem flexiblen Keilelement (30) einstückig gebildet ist, schließbar ist.

10. Regelklappen-Stellorgan nach einem der Ansprüche 4 bis 9, **dadurch gekennzeichnet, dass** der Zahnkranz, der mit dem Befestigungsmittel (42) versehen ist, das flexible Keilelement ist.

11. Regelklappen-Stellorgan nach einem der vorhergehenden Ansprüche, **dadurch gekennzeichnet, dass** ein Aufnahmegehäuse (34) für eine elektronische Steuereinheit (36) des Antriebsmotors (24) auf einem Zahnkranz einstückig gebildet ist.

12. Regelklappen-Stellorgan nach einem der vorhergehenden Ansprüche, **dadurch gekennzeichnet, dass** Stege (66) von dem kreisförmigen Keilelement (32) zu der Welle (18) zur Drehmomentkupplung derselben seitlich an dem flexiblen Keilelement (30) entlang verlaufen.

13. Regelklappen-Stellorgan nach Anspruch 12, **dadurch gekennzeichnet, dass** die Stege (66) durch Vertiefungen (52) des Klappengehäuses (10) verlaufen und gleichzeitig Anschläge für die Drehbewegung der Klappe (14) in der Umfangsrichtung bilden.

14. Regelklappen-Stellorgan nach einem der Ansprüche 1 bis 11, **dadurch gekennzeichnet, dass** das flexible Keilelement (30) mit der Welle (18) Drehmoment übertragend verbunden ist, und dass ein Gehäuse (34) zum Halten des Antriebsmotors (24) und/oder einer elektronischen Steuereinheit (36) für den Antriebsmotor (24) auf dem gegenüberliegenden Ende der Wellenverbindung bereitgestellt wird.

15. Regelklappen-Stellorgan nach einem der vorhergehenden Ansprüche, **dadurch gekennzeichnet, dass** der Motor (24) ein Gleichstrommotor ist.

16. Regelklappen-Stellorgan nach Anspruch 15, **dadurch gekennzeichnet, dass** der abtriebseitige Zahnkranz ein Potentiometer (84) oder einen Hall-Sensor einstellt.

17. Regelklappenanordnung, insbesondere für eine Heizungs- und Lüftungseinheit eines Fahrzeugs, die ein Regelklappen-Stellorgan (22) nach einem der vorhergehenden Ansprüche umfasst, das einen elektrischen Antriebsmotor (24) umfasst, der eine Regelklappe (14) umfasst, die von dem Regelklappen-Stellorgan (22) über eine Wellenverbindung angetrieben wird, und ein Klappengehäuse (10) umfasst, durch das ein Fluss geht und worin die Regelklappe (14) angeordnet ist.

18. Regelklappenanordnung nach Anspruch 17, **dadurch gekennzeichnet, dass** der Antriebsmotor (24) mindestens bereichsweise, bevorzugt ganz, in der Regelklappenwelle (18) untergebracht ist.

19. Regelklappen-Stellorgan nach einem der vorhergehenden Ansprüche, **dadurch gekennzeichnet, dass** der Wellengenerator (28) ein Sonnenrad (63) und Planetenräder (65), die mit dem Sonnenrad (63) kämmen, umfasst, wobei die Planetenräder (65) mit dem flexiblen Keilelement (30) kämmen und dieses verformen.

## Revendications

1. Actionneur de clapet de réglage, en particulier d'un clapet de réglage (14) d'une unité de chauffage et de ventilation d'un véhicule, comportant
- un moteur d'entraînement électrique (24),
- une liaison d'arbre de transmission de couple destinée à être fixée à un arbre de clapet de réglage (18), et
- un engrenage d'arbre sous contrainte (26) qui est positionné entre le moteur d'entraînement (24) et la liaison d'arbre,
lequel engrenage d'arbre sous contrainte (26) transmet le couple généré par le moteur d'entraînement (24) à une liaison d'arbre, l'engrenage d'arbre sous contrainte (26) comportant deux couronnes, qui sont positionnées l'une dans l'autre, sous forme de cannelure circulaire extérieure (32) et de cannelure flexible intérieure (30), **caractérisé en ce que** la liaison d'arbre est reliée à la cannelure circulaire extérieure (32) de façon à transmettre le couple ou est formée sur la cannelure circulaire extérieure (32).

2. Actionneur de clapet de réglage selon la revendication 1, **caractérisé en ce qu'**au moins une section du moteur d'entraînement (24) est logée dans l'engrenage (26) lui-même.

3. Actionneur de clapet de réglage selon la revendication 2, **caractérisé en ce que** le moteur d'entraînement (24) et/ou une unité de commande électronique (36) du moteur d'entraînement (24) s'étend(ent) au moins partiellement dans, et sont/est entouré(s) par, une des couronnes.

4. Actionneur de clapet de réglage selon une des revendications précédentes, **caractérisé en ce qu'**une des couronnes comporte un moyen de fixation (42) pour la fixation de celle-ci au logement de clapet (10).

5. Actionneur de clapet de réglage selon la revendication 4, **caractérisé en ce que** le moyen de fixation (42) fait partie d'une liaison à baïonnette.

6. Actionneur de clapet de réglage selon la revendication 4 ou 5, **caractérisé en ce que** le moyen de fixation (42) forme simultanément le moyen de fixation pour fixer l'actionneur entier (22) au logement de clapet (10).

7. Actionneur de clapet de réglage selon une des revendications 4 à 6, **caractérisé en ce que** le moyen de fixation (42) est formé d'un seul tenant sur la couronne associée de façon monobloc.

8. Actionneur de clapet de réglage selon une des revendications 4 à 7, **caractérisé en ce qu'**une couronne peut être fixée de façon rotative au logement de clapet (10) au moyen d'une liaison de verrouillage qui est en particulier formée d'un seul tenant sur ladite couronne.

9. Actionneur de clapet de réglage selon la revendication 8, **caractérisé en ce que** la liaison de verrouillage peut être formée au moyen d'une rotation de la couronne associée et d'une déflexion latérale d'un doigt de verrouillage (60) qui est en particulier formé d'un seul tenant sur la nervure flexible (30).

10. Actionneur de clapet de réglage selon une des revendications 4 à 9, **caractérisé en ce que** la couronne qui est pourvue du moyen de fixation (42) est la nervure flexible.

11. Actionneur de clapet de réglage selon une des revendications précédentes, **caractérisé en ce qu'**un logement de réception (34) pour une unité de commande électronique (36) du moteur d'entraînement (24) est formé d'un seul tenant sur une couronne.

12. Actionneur de clapet de réglage selon une des revendications précédentes, **caractérisé en ce que** des âmes (66) s'étendent de la nervure circulaire (32) à l'arbre (18), pour leur accouplement de couple, latéralement le long de la nervure flexible (30).

13. Actionneur de clapet de réglage selon la revendication 12, **caractérisé en ce que** les âmes (66) passent à travers des évidements (52) du logement de clapet (10) et forment simultanément des butées pour le mouvement rotatif du clapet (14) dans la direction circonférentielle.

14. Actionneur de clapet de réglage selon une des revendications 1 à 11, **caractérisé en ce que** la nervure flexible (30) est reliée à l'arbre (18) de façon à transmettre le couple et **en ce qu'**un logement (34) pour contenir le moteur d'entraînement (24) et/ou une unité de commande électronique (36) pour le moteur d'entraînement (24) est prévu sur l'extrémité opposée à la liaison d'arbre.

15. Actionneur de clapet de réglage selon une des revendications précédentes, **caractérisé en ce que** le moteur (24) est un moteur CC.

16. Actionneur de clapet de réglage selon la revendication 15, **caractérisé en ce que** la couronne côté sortie d'entraînement règle un potentiomètre (84) ou capteur à effet Hall.

17. Ensemble de clapet de réglage, en particulier d'une unité de chauffage et de ventilation d'un véhicule, comportant un actionneur de clapet de réglage (22), selon une des revendications précédentes, qui comporte un moteur d'entraînement électrique (24), comportant un clapet de réglage (14) qui est entraîné par l'actionneur de clapet de réglage (22) par l'intermédiaire d'une liaison d'arbre, et comportant un logement de clapet (10) qui est traversé par un écoulement et dans l'intérieur duquel est agencé le clapet de réglage (14).

18. Ensemble de clapet de réglage selon la revendication 17, **caractérisé en ce que** le moteur d'entraînement (24) est logé au moins dans des sections, de préférence entièrement, dans l'arbre de clapet de réglage (18).

19. Actionneur de clapet de réglage selon une des revendications précédentes, **caractérisé en ce que** le générateur d'ondes (28) comprend un roue planétaire (63) et des roues satellites (65) qui s'engrènent avec ladite roue planétaire (63), les roues satellites (65) s'engrenant avec la nervure flexible (30) et déformant cette dernière.
